# EUROPEAN PATENT APPLICATION

(11) **EP 2 597 070 A1**
(43) Date of publication of application: **29.05.2013**
(21) Application number: 10854974.2
(22) Date of filing: 21.07.2010
(51) Int. Cl.: C02F 1/461

(54) **DEVICE FOR ELECTROCHEMICALLY PROCESSING WATER OR AQUEOUS SOLUTIONS**

(71) Applicant: Vinogradov, Vladimir Vikentievich, St. Petersburg 196607 (RU); Vinogradova, Svetlana Yurievna, St. Petersburg 196607 (RU)
(72) Inventor: Vinogradov, Vladimir Vikentievich, St. Petersburg 196607 (RU); Vinogradova, Svetlana Yurievna, St. Petersburg 196607 (RU)
(74) Representative: Cabinet Plasseraud
(86) International application number: PCT/EA2010/000005
(87) International publication number: WO 2012/010177

(57) **Abstract**

The invention relates to the field of electrochemical processing of water or aqueous saline solutions and can be used for purifying, sterilizing and activating water, for producing detergent solutions and also for cathodic water softening. The device comprises an outer electrode 1 in the form of a hollow cylinder, within which an inner electrode 2 is arranged, with a semitransparent diaphragm 3 being arranged between the electrodes, said diaphragm dividing the electrode gap into an inner electrode chamber 4 and an outer electrode chamber 5. Dielectric bushes 6 and 7 are mounted at the ends of the outer electrode 1. An inlet channel 8 and an outlet channel 9, respectively, are introduced onto the surface of the bushes, said channels being in communication with the outer electrode chamber 5. The inner electrode 2 is formed with holes 10-12, which connect the cavity of the inner electrode to the inner electrode chamber 4. At least one partition 13 is arranged within the inner electrode. The technical result consists in increasing the productivity, extending the range of pHs and redox potentials produced, extending the service life and reducing the energy consumption.

## Description

The invention relates to the field of electrochemical processing of water or aqueous saline solutions to change their oxidation, reduction and structural properties. The invention can be used for cleaning, disinfecting and activation of water, obtaining detergents, disinfectants and preserving solutions, as well as cathodic water softening.

There are various types of devices for electrochemically processing water, comprising an outer cylindrical electrode, within which is arranged an inner electrode, where a semitransparent diaphragm is arranged between the electrodes, dividing the electrode gap into inner and outer electrode chambers. [Japanese Patent No. 1-104387, cl. C 02F 1/46, 1989, Russian Patent No. 2078737, cl. C02F1/46, 1997].

Obtaining the required technical effect is hampered by the limited functional capabilities of the devices, in not providing solutions to a given redox potential over a wide range and with different pH values.

There is a device for the electrochemical treatment of water or aqueous solutions comprising an outer electrode in the form of a hollow cylinder, within which an inner cylindrical electrode is coaxially arranged, with a coaxially arranged semitransparent diaphragm between the electrodes, dividing the electrode gap in the inner and outer electrode chambers, and the inner electrode chamber is directly connected by the fluid channel [Russian Patent No.2145940, cl. C02F1/461, 2000].

Obtaining the required technical effect is hampered by the limited functional capabilities of the device for the organization of hydrodynamic fluid flow, not allowing a high flow rate of processed fluid and the required values of salinity, which significantly reduces the durability of the product and the quality of the solutions obtained.

There is a device for electrochemically processing water or aqueous solutions comprising an outer tubular electrode, within which an inner electrode is arranged, a semitransparent diaphragm is arranged between the electrodes dividing the electrode gap in the inner and outer electrode chambers, the external electrode chamber is connected through holes in the side surface of the outer cylindrical electrode with inlet and outlet channels, in the inner electrode is at least one hole connecting the inner chamber with the fluid drain channel [Russian patent No. 2132821 6 C02F1/46, 1999].

Obtaining the required technical effect is hampered by the limited functional capabilities of the device, in not providing solutions with a given redox potential and pH in a wide range, low productivity, complexity of installation and maintenance, short product life.

The closest in essential features (prototype) to the utility model is a device for processing water or aqueous solutions comprising an outer electrode in the form of a hollow cylinder, within which an inner cylindrical electrode is arranged coaxially, a semitransparent diaphragm is arranged coaxially between the electrodes dividing the electrode gap in the inner and outer electrode chambers, and dielectric bushes mounted on the ends of the outer electrode, on the surface of the bushes are respectively an inlet and outlet channel connected with the outer electrode chamber, the inner electrode is made with holes connecting the cavity of the inner electrode with the inner electrode chamber [Russian patent No. 2176989 C02F1/461, 2001].

Obtaining the required technical effect is hampered by the limited functional capabilities of the device, in not providing solutions with a given redox potential in an extended range, low productivity, complexity of installation and maintenance.

The claimed invention addresses the problem of creating a device for electrochemically processing water or aqueous solutions with high productivity, ease of use.

The technical effect obtained during the implementation of the claimed invention is expressed in greater productivity, extension of the range of pH obtained and redox potential of the processed water or aqueous saline solutions, improving the reliability of the device, longer life, reduction of labour costs for installation and maintenance of the device, reduction of energy consumption when operating the device, improving the compactness of the device.

The technical effect obtained during the implementation of the claimed invention is expressed in increased productivity, extension of the range of pH and redox potential of the processed water or aqueous saline solutions, specifically of decontaminated and activated drinking water, disinfecting, sterilizing and cleaning solutions, improving the reliability of the device, longer life, reduction of labour costs for installation and maintenance of the device, reduction of energy consumption when operating the device, extended retention time of the properties of the disinfecting, sterilizing and cleaning solutions obtained.

To achieve the above technical effect in the device for electrochemically processing water or aqueous solutions, comprising an outer electrode in the form of a hollow cylinder, within which an inner hollow cylindrical electrode is coaxially arranged, a semitransparent diaphragm is coaxially arranged between the electrodes dividing the electrode gap into inner and outer electrode chambers, and dielectric bushes mounted on the ends of the outer electrode, where there are respectively an inlet and outlet channel on the surface of the bushes connecting with the outer electrode chamber, where the inner electrode is made with holes connecting the cavity of the inner electrode with the inner electrode chamber, within the inner electrode is placed at least one impermeable or weakly permeable partition.

The partition, arranged within the inner electrode, divides the cavity of the inner electrode into two parts, changing the hydrodynamic flow and changing the flow rate of the fluid and, therefore, the processing time of the fluid in the inner chamber of the device. By changing the hydrodynamic flow, productivity is increased, the range of pH values and redox potential is extended, retention time of the properties of the disinfecting, sterilizing and cleaning solutions obtained is extended. Through quality by design, the reliability of the device is improved, its life is longer, as well as reducing the labour costs during installation and maintenance of the device.

In the particular case of the invention in the device for electrochemically processing of water or aqueous solutions, the partition is arranged in the internal cavity of the inner electrode, dividing the inner electrode into two unequal parts: inlet and outlet, and the outlet part of the inner electrode is less than the inlet part.

In the particular case of the invention in the device for electrochemically processing water or aqueous solutions, the partition is arranged in the internal cavity of the inner electrode, dividing the inner electrode into the two parts, inlet and outlet, and one outlet hole is made in the outlet part of the inner electrode, and an inlet hole is made in the inlet part of the inner electrode.

In the particular case of the invention in the inlet part of the inner electrode, a group of at least two holes is additionally made, and the distance between the holes in the group of holes is less than between the inlet and outlet hole and the first hole in this group of holes.

In the particular case of the invention in the inlet part of the inner electrode, a group of holes is additionally made, and the axes of the holes of this group are arranged in a helical line on the lateral surface of the electrode or on the line forming the outer cylindrical surface of the electrode.

In the particular case of the invention, the device for electrochemically processing water or aqueous solutions is fitted with mounting apertures mounted on the ends of dielectric bushes.

In the particular case of the invention, in the device for electrochemically processing water or aqueous solutions the bushes are mounted on the ends of the inner electrode, whose axial holes form the inlet and outlet channels.

In the particular case of the invention in the device for electrochemically processing water or aqueous solutions, the inner electrode is the anode, and the outer electrode is the cathode.

The invention is illustrated by the drawings, where
in fig.1 - the device for electrochemically processing water or aqueous solutions is schematically represented;
in fig. 2 - processed water flow during one of the water processing options is schematically represented;
in fig.3 - processed water flow during the second water processing option is schematically represented.

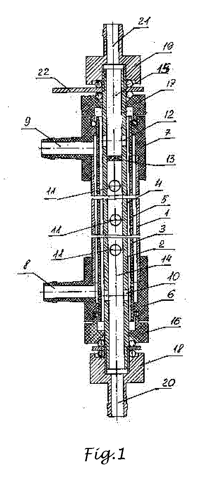

The device for electromechanically processing water or aqueous solutions comprises one outer electrode 1 in the form of a hollow cylinder, within which is arranged an inner electrode 2, between the electrodes is arranged a semitransparent diaphragm 3, dividing the electrode gap into inner 4 and outer 5 electrode chambers (fig. 1). Dielectric bushes 6 and 7 are mounted on the ends of the outer electrode 1. On the surface of the bushes are an inlet channel 8 and an outlet channel 9 respectively, connecting with the outer electrode chamber 5. Inner electrode 2 is made with holes 10-12, connecting the cavity of the inner electrode with the inner electrode chamber 4. Within the inner electrode is arranged at least one partition (plug) 13. The partition divides the cavity of the inner electrode 2 into 2 parts, inlet 14 and outlet 15. In some cases, the outlet part of the inner electrode 15 is smaller than the inlet part 14. The inlet part 14 and the outlet part 15 of the inner electrode in some variants can be equal.

In some examples, in the outlet part of the inner electrode 15 there is one outlet hole 12, and in the inlet part of the inner electrode 14 there can be a group of holes 11, and the distance between the holes 11 in the group of holes is less than between the inlet hole 10 and the first hole 11 in this group of holes. In some variants, the axes of the holes 11 are arranged in a helical line on the lateral surface of the electrode or on the line forming the outer cylindrical surface of the electrode.

The device is fitted with mounting apertures 16 and 17, mounted on the ends of dielectric bushes 6 and 7 respectively.

On the ends of the inner electrode 2 are mounted bushes 18 and 19, whose axial holes form inlet 20 and outlet 21 channels.

Between bush 21 and mounting aperture 17 is arranged a contact 22 connecting inner electrode 2 to a power supply unit. Outer electrode 1 is connected to the power supply unit with a bracket of elastic metal with a contact, which is located on the outer surface of the outer electrode.

Electrodes 1, 2 and diaphragm 3 are fixed, tight and strictly coaxially with bushes 16, 17 of dielectric material, with bushes 18 and 19, and elastic O-rings 23, 24, 25, 26 and 27.

Depending on the functional use, the inner electrode can be the cathode and the outer electrode the anode, and, vice versa, the inner electrode chamber can be the operating, and the outer electrode chamber, the auxiliary, and vice versa.

The device operates as follows.

Depending on what properties and parameters the solution requires, different variants of hydraulic circuit are used.

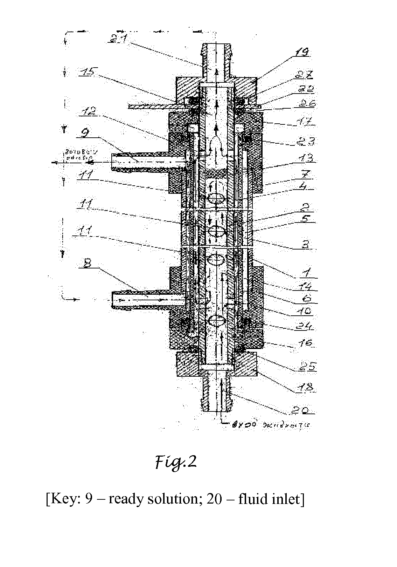

First variant of processing water: the processed water or saline solution, under pressure through inlet channel 20, enters the inlet part 14 of the internal cavity of inner electrode 2, (fig. 2). Passing through the internal cavity of the inner electrode, part of the water immediately enters inner electrode chamber 4 through holes 10-11. The other part of the water is held up against the partition 13, resulting in excess pressure being created in the internal cavity of electrode 2 and the water, with even more pressure, rushes through hole 11 into inner electrode chamber 4. Filling inner electrode chamber 4, the water or solution enters the outlet part 15 of the internal cavity of the inner electrode through outlet hole 12. Further through outlet channel 21, the processed solution is directed to inlet channel 8 of bush 6 in outer electrode chamber 5. Passing through outer electrode chamber 5, the water exits outer electrode chamber 5 through outlet channel 9, and is fed into inlet channel 20, under pressure through inlet channel 20 enters inlet part 14 of the internal cavity of inner electrode 2 (fig. 2). Passing through the internal cavity of the inner electrode, part of the water immediately enters inner electrode chamber 4 through holes 10-11. The other part of the water is held up against the partition 13, resulting in excess pressure being created in the internal cavity of inner electrode 2, and the water rushes under even more pressure through hole 11 into inner electrode chamber 4. Filling inner electrode chamber 4, the water or solution enters the inlet part 15 of the internal cavity of inner electrode 2 through hole 12, voltage is applied to the electrodes such that electrode 2 is the anode, and electrode 1 the cathode. Under pressure, the solution enters outer electrode chamber 5 through semitransparent diaphragm 3, and further, through outlet channel 21, the processed solution is taken for consumers. Polarity options can be different: the outer electrode can be the cathode, and the inner the anode, and, vice versa, the outer electrode the anode, and the inner the cathode.

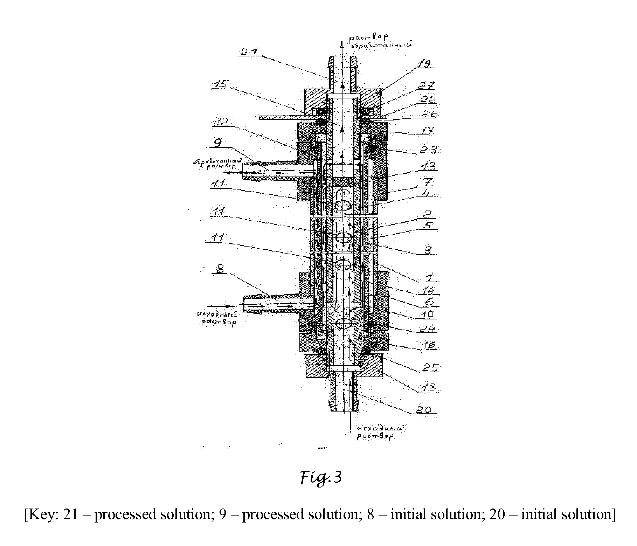

Another variant of processing water: the processed water or saline solution enters inlet part 14 of the internal cavity of inner electrode 2 under pressure through inlet channel 20 and, through inlet channel 8, enters outer chamber 5 of outer electrode 1 (fig. 3). Passing through the inner cavity of the inner electrode, part of the water immediately enters inner electrode chamber 4 through holes 10-11. The other part of the water is held up against the partition 13, resulting in excess pressure being created in the internal cavity of inner electrode 2 and the water under even more pressure rushes through hole 11 into inner electrode chamber 4. Filling inner electrode chamber 4, the water or solution enters the outlet part 15 of the internal cavity of inner electrode 2 through outlet hole 12, and further, through outlet channel 21, part of the processed solution is taken for consumers, and the other part of the solution is directed to outlet channel 8 of bush 6. Voltage is applied to the electrodes such that electrode 2 is the anode, and electrode 1 the cathode. Under pressure, the solution enters outer electrode chamber 5 through semitransparent diaphragm 3 and is taken for consumers through channel 9.

Polarity options of the electrodes can be different: the outer electrode the cathode, and the inner the anode, and, vice versa, the outer electrode the anode, and the inner the cathode.

Depending on what property the solution requires, water and/or different saline solutions are put into the device.

Channel 20 is designed to supply processed water or saline solution. Channel 21 is designed to remove processed water. Channel 9 is designed to remove catholyte or saline solution.

To obtain catholyte, a solution of sodium chloride or other saline solutions and/or water is introduced into channel 20, the solution enters inner electrode chamber 4 through holes 10-11. Voltage is applied to the electrodes such that electrode 2 is the anode, and electrode 1 the cathode. Under pressure, the solution enters outer electrode chamber 5 through semitransparent diaphragm 3. During operation, the device produces two oppositely charged flows of ions on the outer and inner surfaces of diaphragm 3, between the flows there is a potential difference, the charged flows increase the electric field strength in the diaphragm to 35-50 V/cm², increasing the mobility of the ions in the pores of the diaphragm and reducing the electrical resistance of the device. The result is an electroactivated solution (AQUAECA®), which emerges through channel 9, and catholyte solution, which emerges through channel 21. Polarity options of the electrodes can be different: the outer electrode the cathode, and the inner the anode, and, vice versa, the outer electrode the anode, the inner the cathode, therefore, catholyte can emerge through channel 9 and the electroactivated solution (AQUAECA®) can emerge through channel 21.

For disinfectants, a variant is possible when water is introduced through channel 20 which enters the inner electrode chamber. A 30% solution of sodium chloride is introduced through channel 8, which circulates in the cavity of outer electrode chamber 5 with the use of channel 9 for draining this solution into a brine tank, which is then used as a source of the solution to supply it back to the device through channel 8. Water, passing through inner electrode chamber 4, emerges through channel 21 in the form of AQUAECA®.

Polarity options can be different: the outer electrode the cathode, and the inner the anode, and, vice versa, the outer electrode the anode, the inner the cathode. Due to the possibility of changing the polarity of the electrodes, problems of cathode deposits of salts on the membrane do not occur, which is a significant advantage for increased reliability and durability of the device. Cathode deposits that may occur during operation are removed by changing the polarity of the electrodes, which provides ease of maintenance of the device during operation.

Implementation of inner electrode 2 in the form of a hollow cylinder with side holes drilled along its length, and the use of inner electrode chamber 4 as a channel to supply fluid, enables the use of the inner and outer surfaces of the electrode fully in the electrochemical process, which sharply increases the productivity of the installation, while saving on electrode material. This allows for the extension of the range of processed water and/or solutions.

The diaphragm, arranged between the anode and the cathode, makes a major contribution to the electrical resistance of the device. Effective use of the surface of the diaphragm allows for the reduction of electrical resistance, and, therefore, makes the installation less energy-intensive. Changing the diaphragm with different permeability can obtain solutions with different pH values and redox potential.

The presence of an impermeable or semi-permeable partition 13 in the internal cavity of the inner electrode changes the flow hydrodynamics of the processed water, forming a vortex for turbulent mixing in the volume, providing a high degree of mixing of water in the chambers, which allows for the processing of all the microscopic volumes of water in the diffuse part of the double electrical layer at the "electrode-electrolyte" interface. In contrast to the alternative [device], where it is possible for parts of the fluid to pass through without processing, all the processed fluid enters the inner electrode chamber, which increases the productivity of the processing.

The design of the device reduces the number of conjugated and sealing parts and, therefore, the reliability of the device is improved.

Installation and maintenance of the device is very simple. Bushes 6 and 7 are fitted from both ends on outer electrode 1, then diaphragm 3 is inserted into outer electrode 1 with O-rings 23 and 24. Then inner electrode 2 is inserted. O-rings 25 and 26 are inserted into the slots of bushes 6 and 7. Internal electrode 2 is then inserted. Contact 22 is fitted on the top part of the inner electrode, then O-ring 27 is fitted above contact 22 on the top part of the inner electrode. After this, bushes 18 and 19 are screwed all the way into the top and bottom parts of the inner electrode, so as to seal the device from leaks. Finally, an elastic bracket with a contact to connect outer electrode 1 with the power supply unit is fitted to outer electrode 1.

### Example of the device.

The diameter of the inner surface of the outer electrode is 16 mm. The diameter of the operating part of the inner electrode is 8 mm and 5 mm respectively, since in the inner electrode the inner and outer surface of the electrode are involved. The distance between electrodes is 4 mm. These diameters provide the optimum contact of each solution or the water flowing through with the surface of the diaphragm. The diaphragm is made of ceramic. It is possible to make the diaphragm from other materials resistant to corrosion. The diaphragm may be of different thickness and permeability depending on the properties of the solutions required. The cathode of the device is made of stainless steel, titanium, glassy carbon, conductive and acid materials, platinum, niobium. The cathode is covered with platinum, iridium, ruthenium oxides or other metals.

The impermeable partition 13 can be made of metal, plastic, inert composite materials. The semi- permeable partition 13 can be made of metal, of ceramic or of plastic, which has holes.

With the device, it is possible to obtain solutions with pH values from 3 to 11 and redox potential from -950 to +1200 mV. The table shows the comparative performance of the claimed device and parallel devices currently in production.
Parameters and performance of devices for electrochemically processing water

**Table**

| Parameters | Devices | |
|---|---|---|
| | Parallel (Patent No.2145940) | Claimed |
| Volumetric flow rate, m³/sec | 2.8-8.3 | 3-12 |
| Linear flow rate, m/sec | 5.8-24 | 5-44 |
| Water processing time, sec | 0.8-3 | 0.5-6 |
| Current strength, A | 3-8 | 1.5-30 |
| Voltage, V | 10-24 | 12-120 |
| Salinity g/l | 0.5-5.0 | 0.1-5.0 |
| Specific amount of electricity C1/1 | 360-2880 | 360-3000 |
| Amount of fluid processed 1/hour | 60 | 80 |
| Continuous operation, hours | 15,000 | 25,000 |

The data in the table show the higher performance of the claimed device as compared with parallel devices.

According to the examples set out in Russian patent No. 2145940, the volumetric flow rate of processed water is 5.5m³/Sec, voltage 7-20 V, current strength from 5 to 10 A, salinity 0.27-0.7 g/l.

The performance of the claimed device - volumetric flow rate of processed water is 3-12 m³/sec, current strength 1.5-30 A, voltage 30-120 V, salinity 0.1-5 g/l.

Operation of the device according to the invention is performed at a flow rate greater than the flow rate specified in Russian patent No. 2145940.

Comparison of flow rate and salinity allows us to talk about achieving higher technical results than in parallel devices.

## Claims

1. A device for electrochemically processing water and aqueous solutions comprising an outer electrode in the form of a hollow cylinder, within which an inner electrode is coaxially arranged in the form of a hollow cylinder, between the electrodes a semitransparent diaphragm is coaxially arranged, dividing the electrode gap in the inner and outer electrode chambers, and bushes mounted on the ends of the outer electrode, onto the surface of the bushes are introduced respectively an inlet channel and an outlet channel connecting with the outer electrode chamber, the inner electrode is made with holes connecting the cavity of the inner electrode with the outer electrode chamber, and with inlet and outlet holes on the ends, **characterized in that** at least one impermeable or semi-permeable partition is arranged within the inner electrode.

2. A device, in accordance with claim 1, **characterized in that** the partition is arranged in the internal cavity of the inner electrode, dividing the inner electrode into two unequal parts: inlet and outlet, and the outlet part of the inner electrode is smaller than the inlet part.

3. A device, in accordance with claim 1, **characterized in that** a group of at least two holes is made in the inlet part of the inner electrode, and the distance between the holes in the group of holes is less than between the inlet hole and the first hole in the said group of holes, and at least one hole is made in the inner part of the inner electrode.

4. A device, in accordance with claim 1, **characterized in that** a group of holes is additionally made in the inlet part of the inner electrode, with their axes arranged in a helical line along the lateral surface of the electrode or on the line forming the outer cylindrical surface of the electrode.

5. A device, in accordance with claim 1, **characterized in that** mounting apertures are mounted on the ends of dielectric bushes.

6. A device, in accordance with claim 1, **characterized in that** bushes are fitted on the ends of the inner electrode, combined, respectively, with inlet and outlet holes, and the axial holes of the bushes form inlet and outlet channels.
